# EUROPÄISCHE PATENTANMELDUNG

(11) **EP 2 676 754 A1**
(43) Veröffentlichungstag der Anmeldung: **25.12.2013**
(21) Anmeldenummer: 13167825.2
(22) Anmeldetag: 15.05.2013
(51) Int. Cl.: B23D 61/02, B23D 61/04

(54) **Sägeblatt**

(30) Priorität: 22.06.2012 DE 202012102311 U
(71) Anmelder: Albert Knebel GmbH & Co. KG Holding, 72336 Balingen (DE)
(72) Erfinder: Knebel Alexander, 72336 Balingen (DE)
(74) Vertreter: Kohler Schmid Möbus

(57) **Zusammenfassung**

Ein Sägeblatt (10) mit einem Sägeblattkörper (11), der mehrere Sägezähne (12, 13) aufweist und zumindest ein Sägezahn (12, 13) einen Schneidstoffteil (14) mit einer Frontfläche (17) aufweist, der an dem Sägeblattkörper (11) befestigt ist, und vor dem Schneidstoffteil (14) im Sägeblattkörper (11) ein Spanraum (19) vorgesehen ist, wobei die Frontfläche (17) des Schneidstoffteils (14) geradlinig in eine Spanraumfläche (18) übergeht.

## Beschreibung

Die Erfindung betrifft ein Sägeblatt mit einem Sägeblattkörper, der mehrere Sägezähne aufweist, wobei zumindest ein Sägezahn einen Schneidstoffteil mit einer Frontfläche aufweist, der an dem Sägeblattkörper befestigt ist, und wobei vor dem Schneidstoffteil im Sägeblattkörper ein Spanraum vorgesehen ist.

Beim Sägen von Werkstoffen entstehen Sägespäne. Diese Sägespäne müssen aus dem Schnittspalt entfernt werden, um den Sägevorgang nicht zu behindern. Insbesondere muss verhindert werden, dass sich Sägespäne im Schnittspalt verklemmen oder zu einer erhöhten Reibung führen. Bisher war es üblich, einen Spanraum vor dem Schneidstoffteil eines Sägeblattes vorzusehen, der im Wesentlichen kreisbogenförmig ausgebildet ist. Solche Spanräume sind relativ groß, was zur Folge hat, dass die Anzahl der Sägezähne am Sägeblattkörper begrenzt ist.

Aufgabe der vorliegenden Erfindung ist es, ein Sägeblatt bereitzustellen, mit dem die Spanformung günstig beeinflusst werden kann.

Gelöst wird diese Aufgabe durch ein Sägeblatt mit einem Sägeblattkörper, der mehrere Sägezähne aufweist, wobei zumindest ein Sägezahn einen Schneidstoffteil mit einer Frontfläche aufweist, der an dem Sägeblattkörper befestigt ist, und wobei vor dem Schneidstoffteil im Sägeblattkörper ein Spanraum vorgesehen ist und die Fronfläche des Schneidstoffteils geradlinig in eine Spanraumfläche übergeht.

Bei dem erfindungsgemäßen Sägeblatt kann es sich um ein Kreissägeblatt, ein Bandsägeblatt oder ein Bügelsägeblatt handeln. Durch den geradlinigen Übergang von der Frontfläche des Schneidstoffteils in die Spanraumfläche, d. h. aufgrund des glattflächigen, stufenfreien Übergangs vom Schneidstoffteil in den davor liegenden Spanraum, wird ein engeres Rollen der Späne mit günstigem Umformverhalten derselben ermöglicht. Dadurch kommt es zu weniger Störungen durch Spanreibung. Insbesondere ist der Übergang durch die geradlinige oder annähernd geradlinige Verlängerung der Spanfläche gebildet, sodass zwischen der Frontfläche des Schneidstoffteils und dem angrenzenden vorliegende Spanraum ein durchgehender Linienzug gebildet wird. Dadurch, dass aufgrund der Spanraumkontur ein engeres Rollen der Späne ermöglicht wird, ist es außerdem möglich, sowohl den Spanraum als auch den Schneidstoffteil kleiner auszubilden, als dies bisher im Stand der Technik üblich war. Dadurch ist es möglich, mehr Sägezähne am Sägeblattkörper vorzusehen. Insbesondere kann der Schneidstoffteil kleiner gehalten werden, was sich positiv auf die Kosten des Sägeblatts auswirkt.

Ein kleinerer Schneidstoffteil ermöglicht weiterhin kleinere Zahnabstände (kleinere Zahnteilungen) und somit das Anbringen von mehr Zähnen auf dem Sägeblatt, was wiederum für das Bearbeiten von kleinen Werkstücken und dünnwandigen Rohren oder Profilen bessere Schnittflächenqualitäten ergibt. Das erfindungsgemäße Sägeblatt ist insbesondere zur Bearbeitung von Stahlwerkstoffen, Nichteisenmetallen und anderen festen Materialien geeignet.

Besondere Vorteile ergeben sich, wenn der Spanraum zumindest einen geradlinigen Spanraumflächenabschnitt aufweist. Insbesondere kann der Spanraum sowohl geradlinige als auch gebogene Flächenabschnitte aufweisen. Mit einem geradlinigen Abschnitt ist der Spanraum im Vergleich zu herkömmlichen Gestaltungen länger und flacher ausgestaltet. Die Gefahr des Hängenbleibens von Spänen im Spanraum ist gemindert, auch bei geringen Zahnabständen und damit kleinen Spanräumen.

Die Kontur des Spanraums kann wahlweise auch ganz oder in Teilern - ein oder mehrere Teile - mit einer wellenartigen Oberfläche versehen werden, die zusätzlich ein Anhaften eines darauf gleitenden Spanes erschwert bzw. dessen Ablösung vom Sägenkörper erleichtert.

Besonders bevorzugt ist es, wenn der Spanraumgrund geradlinig ausgebildet ist. Dadurch ergibt sich nach außen zum Sägeblattumfang hin eine V-förmige Öffnung des Spanraums ohne Hinterschneidungen, die ein radial nach außen gerichtetes Herausfallen der Späne aus dem Spanraum nach Austauchen des Sägezahns aus dem Schnittspalt begünstigt. Hierdurch wird eine Spanformung begünstigt, sodass die durch den Zerspanungsvorgang entstehenden Kräfte mit ihren resultierenden radialen und tangentialen Anteilen nur in Form von hier vorteilhaften Druckkräften auf den Sägeblattkörper einwirken.

Weitere Vorteile der Erfindung ergeben sich, wenn der Spanraum zwei V-förmige Abschnitte aufweist. Vorzugsweise sind die V-förmigen Abschnitte im Bereich der Frontfläche eines Schneidstoffteils eines ersten Sägezahns und dem Zahnrücken des nächsten Sägezahns angeordnet. Insgesamt ergibt sich so ein Spanraumgrund, der "badewannenförmig"' gestaltet ist.

Gemäß einer Ausgestaltung der Erfindung kann vorgesehen sein, dass der Schneidstoffteil einen Spanflächenteil mit negativem Spanwinkel aufweist, wobei dieser negative Spanflächenteil die gesamte Fläche oder nur einen Teilbereich des eingesetzten Schneidstoffteils umfassen kann. Hierdurch kommen die Vorteile der Erfindung besonders zum Tragen.

Gemäß einer Weiterbildung kann vorgesehen sein, dass der Spanflächenteil mit negativem Spanwinkel unmittelbar geradlinig in die Spanraumfläche übergeht. Somit kann der Spanflächenteil mit negativem Spanwinkel einen Teil des V-förmigen Abschnitts des Spanraums ausbilden bzw. diesen verlängern. Unter einem Spanflächenteil mit negativem Spanwinkel wird dabei ein Spanflächenteil verstanden, der entgegen der Werkzeugbewegungsrichtung bzw. Werkzeugdrehrichtung geneigt ist.

Auch hierdurch wird eine flachere Spanraumgestaltung ermöglicht. Dies wiederum ergibt niedrigere Zahnrücken und damit mehr axiale Steifigkeit des Sägeblatts. In Verbindung mit einem kleineren Schneidstoffteil wird somit ein größerer konstruktiver Gestaltungsspielraum für die Ausgestaltung und Formgebung von Zahnrücken und Spanraum ermöglicht.

Die Verbindung des Schneidstoffteils mit dem Sägeblattkörper entsteht vorzugsweise durch Löten (Hartlötverfahren) oder durch Schweißen (Elektro-Widerstandsschweißen). Durch Schweißen können besonders hohe Haltekräfte auch bei kleinen Schneidstoffteilen bzw. kleinen Kontaktflächen zwischen Schneidstoffteil und Zahnlücken bei gleichzeitig geringem Wärmeinfluss bzw. Wärmeeintrag in den Sägeblattkörper erreicht werden.

Die durch den kleineren Schneidstoffteil gegebene kleinere Verbindungszone zwischen Sägeblattkörper und Schneidstoffteil ergibt geringere Wärmespannungen zwischen Zahnlücken und Schneidstoffteil (hervorgerufen durch die unterschiedlichen Wärmeausdehnungskoeffizienten von Stahl (Sägeblattkörper) und Schneidstoff (in der Regel Hartmetall)) beim Aufbringen des Schneidstoffteils mittels Löten oder Schweißen. Dadurch reduziert sich die Gefahr von Spannungsrissen im Schneidstoffteil.

Vorzugsweise werden zunächst die Schneidstoffteile mit dem Sägeblattkörper, beispielsweise mittels Löten oder Schweißen, verbunden. Anschließend wird vorzugsweise der Übergang von Schneidstoffteil zum Spanraum durch Schleifen hergestellt. Das Schleifen des Schneldstoffteils und die Ausgestaltung des Übergangs zwischen Schneidstoffteil und Spanraum kann somit in einem Arbeitsgang erfolgen.

Die Rohform des Schneidstoffteils kann stäbchenförmig, kugelförmig, quaderförmig oder kreissegmentförmig sein. Wenn die Schneidstoffteile in ihrer Rohform stäbchenförmig ausgebildet sind, können sie insbesondere zylindrisch ausgebildet sein.

Der Schneidstoffteil kann aus Hartmetall, beschichtetem Hartmetall, insbesondere PKD-beschichtetem Hartmetall, Cermet, Stellit oder einem anderen geeigneten Hartstoff ausgebildet sein.

Um den Verschleiß des Sägeblatts zu minimieren, kann das Sägeblatt, nachdem es mit den Schneidstoffteilen versehen wurde, mit einer Hartstoffschicht beschichtet sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigen, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: einen Ausschnitt einer ersten Ausführungsform eines erfindungsgemäßen Sägeblatts;
- Fig. 2: einen Ausschnitt einer zweiten Ausführungsform eines erfindungsgemäßen Sägeblatts;
- Fig. 3a: einen Ausschnitt einer dritten Ausführungsform eines erfindungsgemäßen Sägeblatts;
- Fig. 3b: einen Ausschnitt einer vierten Ausführungsform eines erfindungsgemäßen Sägeblatts.

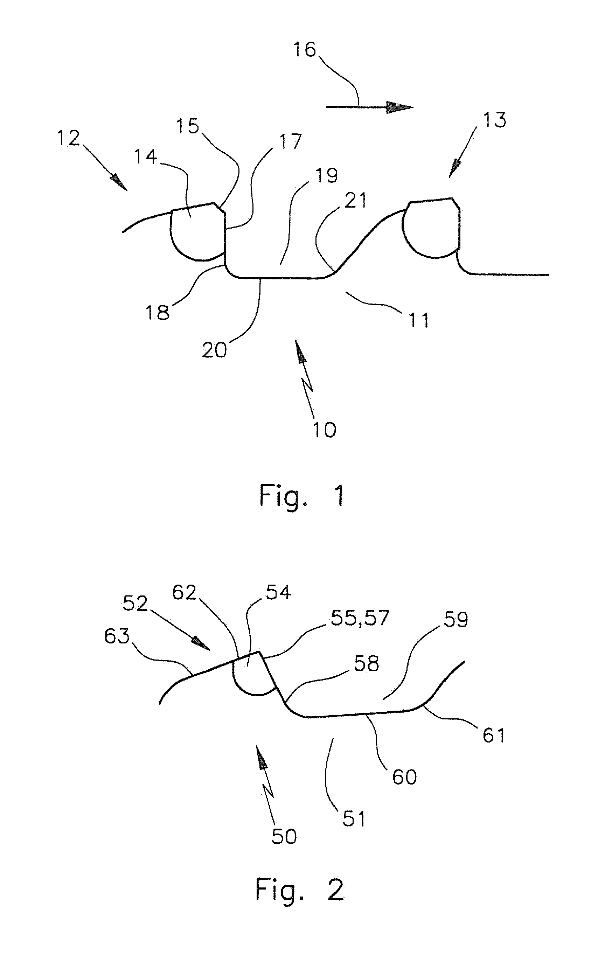

Die Fig. 1 zeigt ein Sägeblatt 10 mit einem Sägeblattkörper 11 und zwei Sägezähnen 12, 13. Die erfindungsgemäßen Besonderheiten werden anhand des Sägezahns 12 geschildert. Der Sägezahn 12 weist einen Schneidstoffteil 14 auf, der beispielsweise aus Hartmetall ausgebildet ist und beispielsweise mittels Schweißen mit dem Sägeblattkörper 11 verbunden ist. Der Schneidstoffteil 14 weist weiterhin einen Spanflächenteil 15 mit negativem Spanwinkel auf. Dies bedeutet, dass der Spannwinkel entgegen der Werkzeugbewegungsrichtung (Pfeil 16) geneigt ist. Weiterhin weist der Schneidstoffteil 14 eine Frontfläche 17 auf, die geradlinig in eine Spanraumfläche 18 eines Spanraums 19 übergeht. Der Spanraum 19 ist im Sägeblattkörper 11 ausgebildet. Der Spanraum 19 dient der Spanformung eines Spans, der beim Sägen erzeugt wird. Insbesondere ist zu erkennen, dass der Übergang von der Frontfläche 17 des Schneidstoffteils 14 zur Spanraumfläche 18 ohne Unstetigkeiten oder Hinterschneidungen ausgebildet ist.

Der Spanraum 19 weist einen geradlinigen Teil, insbesondere einen geradlinigen Spanraumgrund 20, auf, an den sich zu beiden Seiten zwei gebogene Spanraumflächen 18, 21 anschließen. Die gebogenen Spanraumflächen 18, 21 sind annähernd V-förmig im Querschnitt gestaltet. Durch diese V-förmige Öffnung des Spanraums 19 ohne Hinterschneidungen wird ein radial nach außen gerichtetes Herausfallen der Späne aus dem Spanraum 19 nach dem Austauchen des Sägezahns aus dem Schnittspalt begünstigt. Die durch den Zerspanungsvorgang entstehenden Kräfte wirken mit ihren resultierenden radialen und tangentialen Anteilen nur in Form von hier vorteilhaften Druckkräften auf den Sägeblattkörper 11 ein.

Bei der Ausführungsform eines Sägeblatts 50 gemäß der Fig. 2 ist an einem Sägeblattkörper 51 ein Sägezahn 52 vorgesehen, wobei der Sägezahn 52 ein Schneidstoffteil 54 aufweist. Auch der Schneidstoffteil 54 weist einen Spanflächenteil 55 mit negativem Spanwinkel auf. Der Schneidstoffteil 54 bildet gleichzeitig die Frontfläche 57 des Schneidstoffteils 54, die geradlinig, d. h. ohne Unterbrechung und ohne Hinterschneidung, in die Spanraumfläche 58 des Spanraums 59 übergeht. Der Spanraum 59 weist wiederum einen geradlinigen Teil, insbesondere einen geradlinigen Spanraumgrund 60, auf, an den sich die gebogenen Spanraumflächen 58, 61 anschließen. Hier ist deutlich zu erkennen, dass der Spanraum 59 "badewannenartig" ausgebildet ist. Der Schneidstoffteil 54 ist im Vergleich zur Ausführungsform der Fig. 1 noch kleiner gestaltet. Es ist zu erkennen, dass der Rücken 62 geradlinig in den Zahnrückenteil 63, der aus dem Sägeblattkörper 51 gebildet ist, übergeht.

Durch die erfindungsgemäße Gestaltung des Spanraums 19, 59, insbesondere durch die badewannenartige Gestaltung mit einem ebenen Spanraumgrund und sich daran anschließenden V-förmigen Spanraumflächenabschnitten, ergibt sich eine besonders gute Spanformung. Insbesondere wird der Span gezwungen, eine sehr kleine, aufgerollte Form einzunehmen. Dadurch wird der Transport der Späne aus dem Schnittspalt begünstigt. Außerdem können mehr Sägezähne bei gegebener Sägeblattgröße vorgesehen werden.

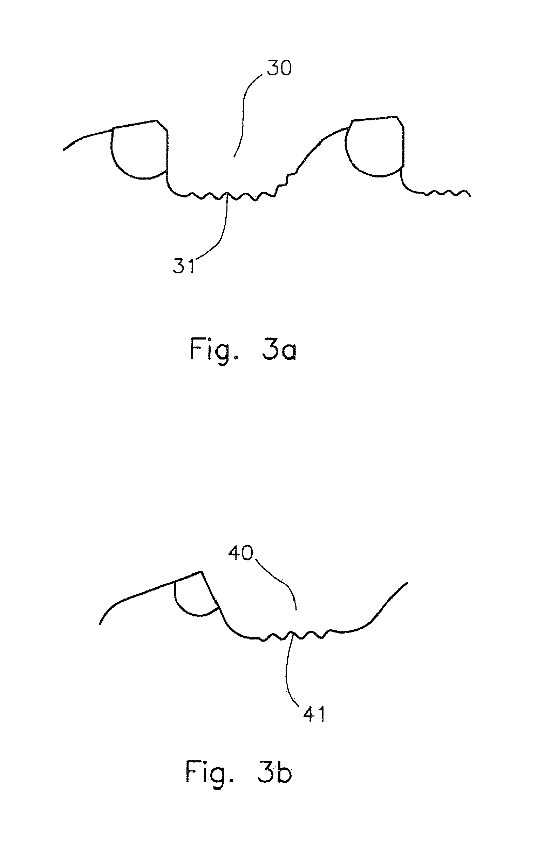

Fig. 3a und 3b zeigen Sägeblattausführungen mit zusätzlicher Ausgestaltung einer Spanraumkontur 30, 40 mit wellenförmige Oberfläche 31, 41. Die Höhe dieser Wellenkonturen, also der vertikale Abstand von "Wellental" zu "Wellenberg", kann bevorzugt 0,1 mm bis 1,0 mm und deren Abstand ("Wellenlänge""), also der horizontale Abstand zwischen zwei Wellentälern bzw. zwei Wellenbergen, bevorzugt 0,5 mm bis 5,0 mm betragen.

## Patentansprüche

1. Sägeblatt (10, 30) mit einem Sägeblattkörper (11, 51), der mehrere Sägezähne (12, 13, 52) aufweist, wobei zumindest ein Sägezahn (12, 13, 52) einen Schneidstoffteil (14, 54) mit einer Frontfläche (17, 57) aufweist, der an dem Sägeblattkörper (11, 51) befestigt ist, und wobei vor dem Schneidstoffteil (14, 54) im Sägeblattkörper (11, 51) ein Spanraum (19, 59) vorgesehen ist, **dadurch gekennzeichnet, dass** die Frontfläche (17, 57) des Schneidstoffteils (14, 54) geradlinig in eine Spanraumfläche (18, 58) übergeht.

2. Sägeblatt nach einem der vorhergehenden Ansprüche, **dadurch gekennzeichnet, dass** der Spanraum (19, 59) zumindest einen geradlinigen Spanraumflächenabschnitt (20, 60) aufweist.

3. Sägeblatt nach einem der vorhergehenden Ansprüche, **dadurch gekennzeichnet, dass** der Spanraumgrund (20, 60) geradlinig ausgebildet ist.

4. Sägeblatt nach einem der vorhergehenden Ansprüche, **dadurch gekennzeichnet, dass** der Spanraum (19, 59) zwei V-förmige Abschnitte aufweist.

5. Sägeblatt nach einem der vorhergehenden Ansprüche, **dadurch gekennzeichnet, dass** der Schneidstoffteil (14, 54) einen Spanflächenteil (15, 55) mit negativem Spanwinkel aufweist.

6. Sägeblatt nach einem der vorhergehenden Ansprüche, **dadurch gekennzeichnet, dass** der Spanflächenteil (15, 55) mit negativem Spanwinkel unmittelbar geradlinig in die Spanraumfläche (12, 52) übergeht.

7. Sägeblatt nach einem der vorhergehenden Ansprüche, **dadurch gekennzeichnet, dass** die Kontur des Spanraums ganz oder in Teilen mit einer wellenförmigen Oberfläche versehen ist, wobei die Höhe dieser Wellenkontur vorzugsweise zwischen 0,1 mm und 1,0 mm und die Wellenlänge vorzugsweise zwischen 0,5 und 5,0 mm betragen kann.

8. Sägeblatt nach einem der vorhergehenden Ansprüche, **dadurch gekennzeichnet, dass** der Übergang von Schneidstoffteil (14, 54) zum Spanraum (19, 59) durch Schleifen hergestellt ist.

9. Sägeblatt nach einem der vorhergehenden Ansprüche, **dadurch gekennzeichnet, dass** die Rohform des Schneidstoffteils (14, 54) stäbchenförmig, kugelförmig, quaderförmig oder kreissegmentförmig ist.

10. Sägeblatt nach einem der vorhergehenden Ansprüche, **dadurch gekennzeichnet, dass** der Schneidstoffteil (14, 54) aus Hartmetall, Cermet, Stellit ausgebildet ist.

11. Sägeblatt nach einem der vorhergehenden Ansprüche, **dadurch gekennzeichnet, dass** das Sägeblatt (10,50) mit einer Hartstoffschicht beschichtet ist.
